# EUROPEAN PATENT SPECIFICATION

(11) **EP 1 279 807 B1**
(45) Date of publication and mention of the grant of the patent: **21.01.2004**
(21) Application number: 02077680.3
(22) Date of filing: 05.07.2002
(51) Int. Cl.: F02B 67/06, F02B 75/06, F16F 15/14, F16F 15/126

(54) **Pulley unit, in particular for an internal combustion engine**
Riemenscheibeneinheit für eine Brennkraftmaschine
Poulie pour un moteur à combustion interne

(30) Priority: 26.07.2001 IT TO20010739
(43) Date of publication of application: 29.01.2003
(73) Proprietor: Diantel Corporation N.V., Curaçao (AN)
(72) Inventor: Frigerio, Carlo, 54100 Massa (MS) (IT)
(74) Representative: Cian, Paolo

(56) References cited:
- EP-A- 0 459 894
- WO-A-01/51827
- WO-A-98/50709
- DE-A- 4 230 966
- DE-A- 4 407 157
- DE-C- 19 636 628
- US-A- 5 140 868

## Description

The present invention generally refers to pulley units, in particular for internal combustion engines.

The driving of auxiliary apparatuses of motor-vehicle engines, such as the alternator, the power steering pump and the air conditioner compressor shaft, is carried out in the almost totality of the cases by means of a belt which is driven into rotation by a driving pulley secured to an end of the engine crankshaft. The transmission of the motion from the crankshaft to the driven pulleys of the auxiliary apparatuses, is affected by the fact that the rotating movement of the crankshaft has periodic fluctuations of variable amplitude and frequency. Since the belt constitutes the connection member between the driving pulley and the driven pulleys, it unavoidably transmits such fluctuating movements to the driven members. This fact has, in principle, the result that variable forces are applied to the belt and to the shafts of the auxiliary apparatuses, with the possibility of generating vibrations and noises which are transmitted to the auxiliary apparatuses, with troubles for their operation and with a reduction of comfort for the passengers of the vehicle.

Moreover, since auxiliary apparatuses with more and more high absorption of power, and consequently with a greater inertia, are associated to modern motor-vehicle engines, the belt tends to be dragged by the driven pulleys of the auxiliary apparatuses at a speed greater than that of the driving pulley, due to fluctuating movements of the crankshaft and in some operational situations, like as a result of a sharp deceleration of the engine. Under these circumstances, conditions of very high tension of the belt may arise, which may cause the sliding of the belt with respect to the driving pulley.

In general, the belt is kept tightened by an automatic tightening device, the position of which varies in order to ensure that the tension of the belt is as most constant as possible. Vibrations induced by irregular rotating movements of the crankshaft or by sharp variations of the crankshaft rotating speed rate, cause dishevelled movements of the tightener, with large amplitude oscillations. This operational condition opposes to the attainment of the objects of duration, reliability and noiselessness wished by the engine makers.

In the attempt to obviate these drawbacks, and in consideration of the fact that the amplitudes of the crankshaft angular vibration cannot be usually reduced, it is necessary to reduce the amplitude of the vibrations transmitted from the driving pulley to the belt and from the belt to the driven pulleys of the auxiliary apparatuses, by using devices of the passive type. In practice, it is necessary to insert additional devices in the belt transmission system, unavoidably involving constructive, design and setup complications, as well as an increase of the costs.

Usually, a torsional oscillation damper is associated to the driving pulley, for example coaxially sideways on it, in order to reduce the high frequency torsional vibrations of the crankshaft.

For economy and space reasons, both the pulley and the torsional oscillation damper functions can be integrated into a single member secured on the crankshaft, such a member carrying out the damper function and having on its outer periphery one or more races for the engagement by the belt. In this regard, pulleys have been recently used incorporating a flexible coupling in order to oppose the transmission to the belt of vibrations generated by the fluctuating operation of the crankshaft, in engines of motor-vehicles of high or upper-middle class. These pulleys have a hub radial inner portion and a pulley radial outer portion on which races for the engagement by the belt are formed, between which an annular insert of an elastomeric material is interposed, which is fixed to the radial inner portion and to the outer portion. However, the flexible coupling of these pulleys has not proven to be fully reliable in operation. In fact, in order to effectively filter the vibrations of the driving shaft, this coupling should be, on the one hand, very yielding and elastic in order to allow a high damping of the shaft torsional oscillations in a wide field of the oscillation frequencies, and on the other hand, very sturdy and resistant for being able to transmit, without enduring damages, the high average torques absorbed by the auxiliary apparatuses. Actually, the sturdiness of the elastomeric insert must be reduced for allowing the coupling to carry out the function of an elastic filter for the vibrations. However, due to the fact that the characteristics of the material of the insert must constitute a compromise between the opposite requirements indicated above, a scarce efficiency of the coupling arises and, in any case, a great difficulty of system setup. In the more common case, this coupling introduces a substantially "symmetrical" elastic behaviour with respect to the tendency of the hub portion to rotate faster or slower than the pulley portion. The aforesaid compromise unavoidably leads to high stresses of the elastomeric insert, whereby it tends to be damaged until it breaks after a life cycle which is well shorter than the average life of the motor-vehicle on which the engine is installed, with a consequent detriment of the operation of the engine.

Another element unfavourable to the use of pulleys incorporating a flexible coupling of the type described above, consists of the need to "syntonize" the flexible coupling in function of the installation on which it will have to be used, that is taking into account the power absorbed by the specific auxiliary apparatuses associated to the engine as well as their inertia, making these pulleys not very operationally flexible since they can be scarcely adapted to installations which may be equipped with various combinations of auxiliary apparatuses.

Because of the normally great flexibility due to the presence of the elastomeric material insert, these known couplings have a large amplitude resonance comprised in the range of the engine speeds between the electric start and its slow running. The positioning of this resonance is particularly important from the operating point of view, since it must be chosen so as to be far away both from the slow running speed and from the electric start speed. The presence of the elastomeric material insert makes the attainment of this target particularly difficult, since the characteristics of stiffness of the insert vary strongly with the temperature variations, causing a variation of the resonance angular speed of the coupling. Since the passage at the resonance speed may cause the complete separation of the belt from one or more of the driven pulleys of the auxiliary apparatuses, with various drawbacks and a noise which can be perceived in the passenger compartment, the fact that the resonance speed can vary with the temperature constitutes a further drawback making the setup even more complex.

In order to avoid the breaking of the elastomeric insert of the coupling or, as an alternative, of the belt or of its tightening device, in the case of sudden decelerations of the engine, the measure has been used to add a freewheel device or overrunning joint on the pulley shaft of one of the auxiliary apparatuses, typically on the shaft of the alternator which usually has an inertia greater than that of the other auxiliary apparatuses, with a consequent increase of the costs of the entire system.

The freewheel device which is added in this case to the belt transmission system, has also the drawback to generate impulsive stresses in the stretched branch of the belt, in consequence of the fact that the engaging action generated by it is discontinuous, since it is determined by the matching, in dynamic conditions, of two masses which were separated beforehand.

Under the circumstances, the whole formed by a flexible coupling provided with an elastomeric insert and associated with the driving pulley, and by a traditional freewheel device associated with the driven pulley of the alternator, constitutes a generally complex solution, which ensues to be very difficult to setup and of high cost.

EP-A-980479 describes a pulley unit intended to be mounted on the shaft of an alternator of a motor vehicle, including a hub and a pulley rotatably mounted coaxially outside the hub, which is adapted to be engaged by a belt. Between the hub and the pulley a connection mechanism is interposed, which comprises an elastic element and a unidirectional clutch assemby. The elastic element can be constituted by at least one metallic spring, as for example of the spiral type, having an end fixed to the hub and the opposite end connected to the unidirectional clutch assembly. The latter consists in a band wound around the spring, a layer of friction material being applied on its outer surface for the engagement of an inner cylindrical surface of the pulley portion of the unit. During the phases of acceleration and rotation with constant speed of the pulley, that is when the pulley tends to rotate faster than the hub or at the same speed, the unidirectional clutch assembly assures the integral dragging of the hub thanks to the engagement of ,the friction material with the inner cylindrical surface of the pulley. In the deceleration phases, that is when the pulley tends to rotate slower than the hub, the clutch unit allows the free rotation of the pulley with respect to the hub. This known pulley unit has the typical disadvantages of the systems provided with a free-wheel device associated to a driven pulley, mainly consisting in the generation of impulsive stresses in the stretched branch of the belt. Then, the fact that an elastic connection element is present on the driven pulley of the alternator or of another auxiliary apparatus, increases the own frequencies of the belt transmission system, with a consequent shifting of the system resonance in the field of the frequencies of normal use of the motor, which originates annoying vibrations. Moreover, with such a solution, only the auxiliary apparatus provided with this pulley unit can enjoy operational benefits in some operating conditions, while these benefits are not perceived by the other auxiliary apparatuses.

More specifically, the present invention relates to a pulley unit comprising:
- a hub adapted to be fastened at the end of a driving shaft, such as the crankshaft of an internal combustion engine,
- a ring-shaped element externally coaxial to the hub and having a peripheral seat for the engagement by a belt which is wound round the pulley unit, and
- connection means interposed between the hub and the ring-shaped element, said means being adapted to undergo elastic deformations as a result of the tendency of the hub to assume a speed different from that of the ring-shaped element, in order to carry out the function of a flexible coupling at least for small variations of said speed difference, said connection means having a behaviour different depending on the tendency of the hub to rotate faster or slower than the ring-shaped element, such that with the increase of the tendency of the hub to rotate faster than the ring-shaped element, said means assume the behaviour of a flexible coupling with increasing stiffness, while with the increase of the tendency of the hub to rotate slower than the ring-shaped element, said means tend to make the hub uncoupled from the ring-shaped element.

A device known of the type defined above is described for example in DE-A-4407157. This device, which is intended to dampen the oscillations of a crankshaft of an internal combustion engine, comprises a pulley provided with an integral annular mass of compensation, rotatably mounted on a hub fastened to an end of the crankshaft, with the interposition of a bearing. An elastic connection mechanism is also interposed between the hub and the pulley, which comprises a coil spring coaxial with the hub, having a first end anchored to the pulley and the second end arranged in sliding contact on the outer radial surface of the hub by a friction block.

However, this known device has not proven to be effective in the operation and has also the disadvantage of having relatively wide axial dimensions. Moreover, due to the fact that it is provided with a coil spring having a plurality of coils in contact with the external surface of the pulley hub, important vibrations are originated during the operational conditions in which the pulley is blocked with respect to the hub, with consequent squeaks and noises, which cannot be accepted in view of the practical use of the device.

DE-C-196 36 628 shows a pulley unit for a crankshaft of an engine, comprising at least a metallic helical spring arranged along a circular path coaxial with the axis of the pulley and interposed between the hub and an external ring shaped element of the pulley. This pulley unit mainly performs the mere function of a freewheel device.

In order to eliminate the drawbacks of the above mentioned prior art, the subject of the invention is a device of the type defined above, characterized in that the connection means comprise at least one metallic spiral spring wound on a plane perpendicular to the axis of the pulley unit, so as to undergo a compressive stress when a tendency originates in the hub to rotate faster than the ring-shaped element.

Thanks to such characteristic, the device according to the invention has turned out to be particularly effective in use and such as to guarantee an extended life of the belt/pulley transmission system, with costs considerably lower than those of the whole constituted by the elastomeric flexible coupling on the driving pulley as well as by the freewheel device associated with the driven pulley of the alternator. It has moreover a more compact structure, to full advantage of the reduction of the space covered in the engine compartment of the motor-vehicle, and it makes the setup and "syntonization" easier. Furthermore, the behaviour of the flexible coupling is substantially independent from the temperature, differently from what happens with the elastomeric flexible coupling of the prior art.

According to a preferred feature of the invention, the pulley unit incorporates a torsional vibration damping device.

In this way, it is possible to reduce the possibility of transmission of the crankshaft vibrations to the belt and to its tightening device, as well as to reduce the possibility of amplification of such vibrations.

Further characteristics and advantages of the invention will become more clearly evident from a reading of the following detailed description, provided purely by way of a not limitative example and referred to the attached drawings, in which:
figure 1 is a sectional lateral elevational view of a pulley unit according to a first embodiment of the invention,
figure 2 is a front elevational view, sectioned along the line II-II of figure 1,
figure 3 is a lateral elevational and sectional view of another embodiment of the pulley unit according to the invention,
figure 4 is a rear elevational view, sectioned along the line IV-IV of figure 3,
figure 5 is a lateral sectional elevational view of a modification of the pulley unit illustrated in figures 3 and 4, and
figure 6 is a front elevational view, sectioned along the line VI-VI of figure 5.

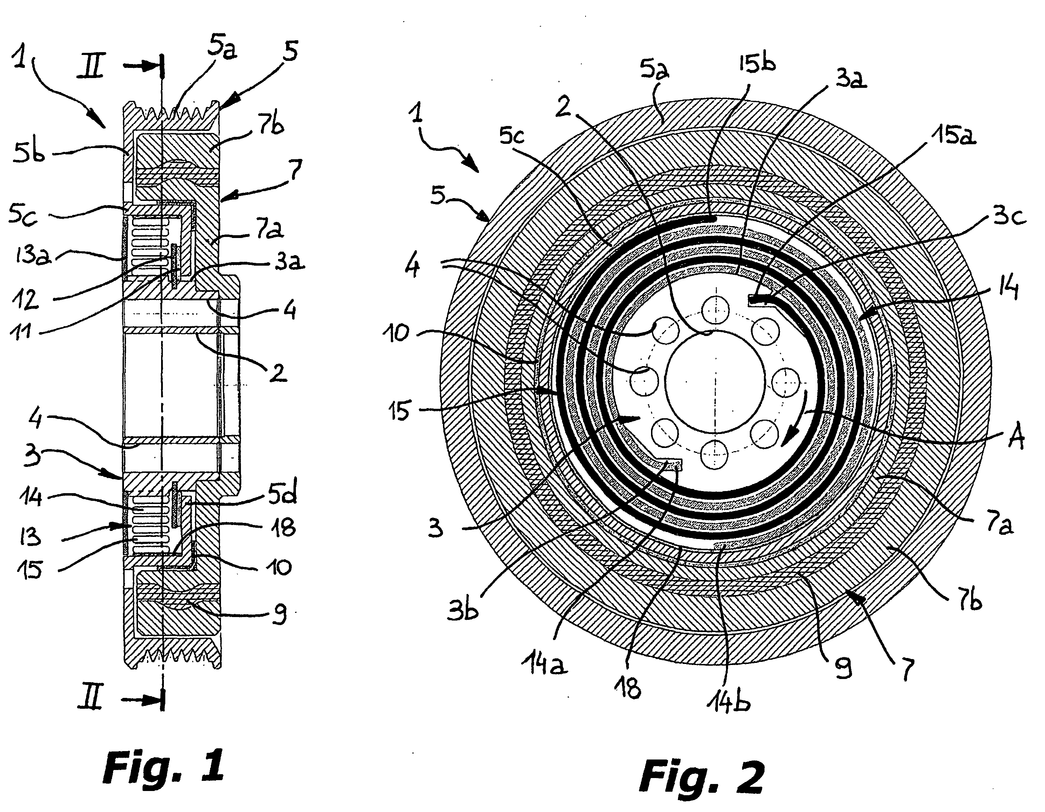

With initial reference to figures 1 and 2, a pulley unit according to a first embodiment of the invention is indicated as a whole with reference numeral 1.

The unit 1 comprises a hub 3 having a central hole 2 for fastening it at the end of a shaft, for example of the crankshaft of an internal combustion engine, around which a plurality of holes 4 are made for fixing the hub 3.

Coaxially and outside the hub 3, a ring-shaped element 5 is freely rotatably mounted, such element having a first outer axial wall 5a on which a plurality of circumferential races are formed, which are intended to be engaged by corresponding ribs of a flexible belt (not illustrated). From the wall 5a, a first radial annular wall 5b extends towards the hub 3, to which a second axial wall 5c is connected. From the wall 5c a second radial annular wall 5d extends, still towards the hub 3.

Moreover, a torsional damper 7 is preferably fixed to the hub 3, which damper comprises a bell-shaped flange 7a and an annular body 7b constituting the inertial mass of the damper 7. An insert 9 of elastomeric material is interposed between the flange 7a and the body 7b, and has the function of elastically connecting the flange 7a and the body 7b. As an alternative to the solution of the torsional damper 7 incorporated in the unit 1, a torsional damper separated from the ring 5 can be arranged, and placed, for example, sideways on the ring 5.

With reference to the structure of the unit 1 illustrated in figures 1 and 2, that is with the torsional damper 7 incorporated in the unit, a plain bearing 10 having an L-shaped cross-section is interposed between the walls 5c and 5d of the element 5, on the one hand, and the bell-shaped flange 7a on the other hand. Another plain bearing 11 having a flat ring shape is interposed between the wall 5d of the element 5 and an elastic ring 12 which is parallel to the wall 5d and is connected to the radial outer wall of the hub 3, indicated with the reference 3a. The elastic ring 12 applies a compression load so as to preload the bearing 11 and the portion of the L-shaped bearing 10 parallel to it, in order to keep the element 5 adjacent to the bell-shaped flange 7a, while the portion of the bearing 10 which is parallel to the wall 5c of the element 5 has the function to control the load applied by the belt to the unit 1.

The walls 5c and 5d of the element 5 and the radial outer surface 3a of the hub 3 define an annular cavity 13 which is closed towards the outside by an annular cover 13a, at its portion opposite to the flange 7a. Connection means of the hub 3 and the ring-shaped element 5 are arranged inside the cavity 13, these means being elastically deformable as a result of the tendency of the hub 3 to assume a speed different from that of the ring-shaped element 5, in order to carry out the function of a flexible coupling between the hub 3 and the element 5 in a range of substantially small variations of the speed difference between the hub 3 and the element 5.

The connection means are preferably made by means of metallic spiral springs 14 and 15 having rectangular cross-section, which are wound round the hub 3 in the direction of the angular rotation of the hub 3 indicated by the arrow A in figure 2, in such a way that they are subject to a compression load when the hub 3 tends to rotate faster than the ring-shaped element 5, as will become more clear in the following. As an alternative to the solution illustrated in the figures, which comprises two spiral springs, only a single spiral spring could be used, or a number of spiral springs greater than two. Moreover, the spring or the springs used could have a cross-sectional shape different from the rectangular one, for example circular. In addition, the term "compression" or "compressive" used in the description and in the appended claims for indicating a kind of load to which the spiral springs are subject, should be intended as a synonym of "compression/bending" or "combined compressive and bending stress", and is used for indicating the opposite of the kind of load to which the common helical springs are subject, which is mostly torsional.

The springs 14 and 15 have each a first end 14a, 15a arranged within a respective seat 3b, 3c formed in the hub 3. Preferably, each of the seats 3b, 3c is slightly slanted with respect to the radial direction of the hub 3 in order to be open in the direction of the rotation of the hub 3. The second ends 14b, 15b of the springs 14 and 15 are arranged adjacent to the wall 5c of the element 5 and, in particular, they rest on an annular friction lining 18 applied to the surface of the wall 5c facing the hub 3.

In the operation of the unit 1, when the hub 3 tends to rotate faster than the element 5, that is when the belt wound round the element 5 works in a traction condition, which corresponds to a constant speed of rotation of the engine, the springs 14 and 15 undergo a compressive stress due to the contact with the wall 5c, and tend to expand radially so as to interfere with the lining 18. In this condition, and therefore when small differences of the rotating speed occur, the behaviour of the connection means between the hub 3 and the element 5 is mainly elastic. When the tendency of the hub 3 to assume a rotating speed greater than the rotating speed of the element 5 increases, that is under acceleration conditions of the engine, the elastic characteristic of the connection means varies. In particular, when the angular phase-difference between the hub 3 and the element 5 grows, the torque transmitted to the springs 14, 15 grows asymptotically, so that the connection means between the hub 3 and the element 5 tend to assume a behaviour similar to that of a substantially stiff joint when the speed difference between the hub 3 and the element 5 exceeds a predetermined value.

When instead the hub 3 tends to rotate slower than the element 5, if the difference between the rotating speed is small, the effect of flexible coupling owed to the action of the springs 14 and 15, still prevails. When the tendency of the hub 3 to rotate slower than the element 5 increases, as in the case of a sudden deceleration of the engine, in which condition the driven pulleys of the auxiliary apparatus tend to drive the belt because of their inertia, the springs 14 and 15 tend to contract and diminish their pressure on the lining 18, so that the hub 3 tends to uncouple from the ring-shaped element 5, which can freely rotate with respect to the hub 3, when the difference between the speeds of the hub 3 and the element 5 is less than a predetermined value. In this condition, the connection means carry out the function of an overrunning joint.

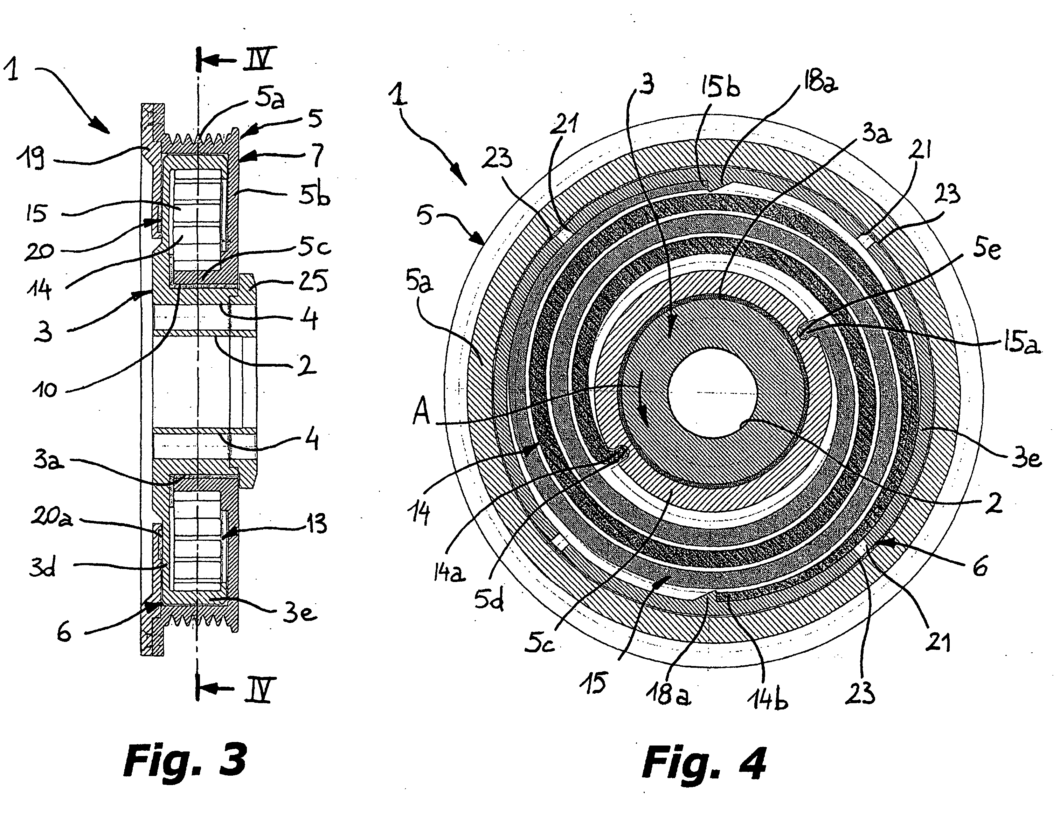

Another embodiment of the unit 1 is illustrated in figures 3 and 4, wherein the same reference numerals have been used for indicating parts which are equal or similar to those of the embodiment previously described, in which embodiment the torsional damper, still generally indicated by the reference number 7, is of the viscous fluid type.

In this embodiment, the hub 3 has a radial flange 3d, from whose end opposite to the radial outer surface 3a of the hub 3, a cylindrical axial wall 3e extends, having a bent peripheral edge.

The ring-shaped element 5, which is arranged freely rotatable outside the hub 3, has an outer wall 5a parallel to the wall 3e. The wall 5a has a radial inner surface spaced from the radial outer surface of the wall 3e by a small gap, in such a way to form a cylindrical chamber 6 having a small radial thickness, between the wall 3e and the wall 5a, the aim of which will be more clear from the following of the description.

The radial annular wall 5b extending from the wall 5a to the hub 3, which is in this case parallel to the flange 3d, is connected to an axial wall 5c which is parallel to the wall 5a and adjacent to the surface 3a of the hub 3. An L-shaped plain bearing 10 is interposed between the surface 3a and the wall 5c, and has an axial portion whose function is to control the load applied by the belt to the unit 1.

Between the walls 3d, 3e which are connected to the hub 3 and the walls 5b, 5c of the element 5, an annular cavity 13 is defined in which the two spiral springs 14 and 15 with rectangular cross-section are arranged, still wound round the hub 3 so as to undergo a compression load when the hub 3 tends to rotate faster than the element 5. The first ends 14a, 15a of the springs 14 and 15 are bent so that each of them constitute a hook portion engaging a respective seat 5d, 5e formed on the surface of the wall 5c facing the cavity 13. The second ends 14b, 15b of the springs 14 and 15 are tapered and arranged adjacent to the surface of the wall 3e facing the cavity 13 and normally in abutment onto tooth-shaped radial appendages 18a extending from the wall 3e. The side of each of the appendages 18a opposite to that one on which an end 14b, 15b of the respective spring 14, 15 abuts, is slanted with respect to the tangent to the wall 3e, so as to promote the sliding of such ends when a clockwise rotation of the wall 3e occurs with respect to the wall 5c (reference being made to figure 4).

A ring flange 19 parallel and adjacent to the wall 3d is then fixed, for example by screws, at the end edge of the wall 5b opposite to the wall 5b. The unit formed by the ring-shaped element 5 and by the annular flange 19 constitutes in this case the inertial mass of the torsional damper 7. The cylindrical chamber 6 contains a high viscosity liquid, typically silicone oil, providing a viscous connection between the inertial mass of the torsional damper 7 and the walls 3d and 3e connected to the hub 3. The viscosity of the liquid held in the chamber 6 varies in function of the temperature, so that it provides a viscous connection between the inertial mass of the torsional damper 7 and the walls 3d and 3e. In order to allow the circulation of the viscous liquid towards the cylindrical chamber 6, a plurality of radial through holes 21 are formed in the wall 3e, which end, at their portion facing the chamber 6, with respective collecting notches 23. Moreover, a seat 20 for receiving an annular seal 20a to prevent any discharge of the viscous liquid from the chamber 6 outside the unit 1, is formed on the face of the flange 19 facing the wall 3d.

A locking ring 25 is then fixed at the axial end of the hub 3 opposite to the wall 3d, for preventing the axial movements of the ring-shaped element 5 with respect to the hub 3.

Still in this case, when the hub 3 tends to rotate faster than the element 5, that is in the normal working condition in which the engine operates in a steady state, the springs 14 and 15 undergo a compressive stress owing to the fact that their ends 14a and 15a are connected to the wall 5c, while the ends 14b and 15b abut on the radial appendages 18a. For small differences between the rotating speeds of the hub 3 and the element 5, the behaviour of the connection means of the hub 3 and the element 5 is mainly elastic. When the tendency of the hub 3 to rotate faster than the element 5 increases, which happens in the case of an acceleration of the engine, the springs 14 and 15 tend to expand so that their free portion, that is the portion which does not abut on the wall 3e, and therefore the portion which is adapted to carry out an elastic action, is reduced, whereby the elastic behaviour of the connection means becomes more and more similar to that of a stiff joint.

When the hub 3 tends to rotate slower than the element 5, with a small difference of speed, the springs 14 and 15 still carry out a mainly elastic action. With the increase of the tendency of the hub 3 to rotate slower than the element 5 and beyond a predetermined threshold, as in the case of a sudden deceleration of the engine, the springs 14 and 15 tend to contract. Consequently, their pressure on the radial inner surface of the wall 3e decreases, so that the hub 3 tends to uncouple from the annular element 5, and the ends 14b, 15b can slide along the slanted walls of the appendages 18a, attaining the operation of an overrunning joint until the deceleration stops.

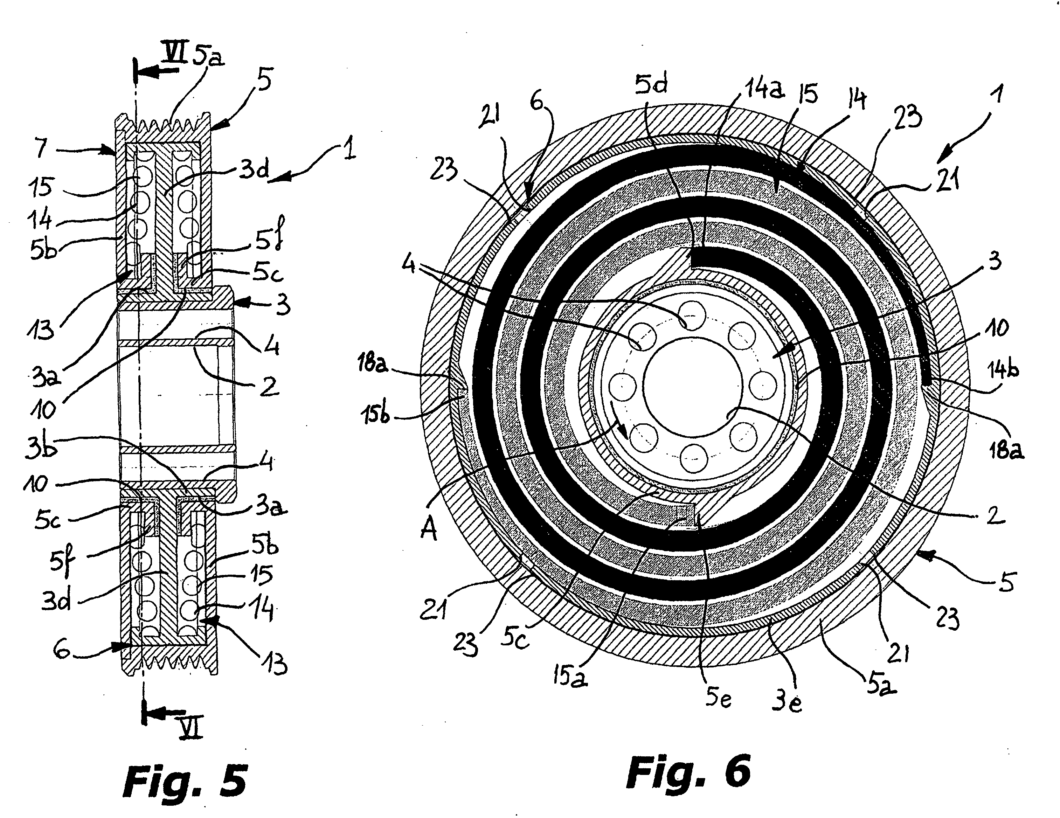

A modification of the embodiment described with reference to figures 3 and 4 is illustrated in figures 5 and 6. Again, in these figures the same reference numerals have been used in order to indicate parts which are equal or similar to those of the embodiments previously described.

In the unit 1 of this modification, a ring having a substantially I-shaped cross-section is fixed to the hub 3, or made integral with it. Such a ring comprises a bush 3b surrounding the hub 3, from which a disc-shaped wall 3d radially extends. In correspondence of the outer edge of the wall 3d, a cylindrical wall 3e is fixed, whose edges axially opposite are bent towards the hub 3.

The ring-shaped element 5 has a box-like shape adapted to receive inside it the I cross-section ring. In particular, the outer wall 5a of the element 5 is arranged adjacent to the cylindrical wall 3e, being there a small radial gap between such walls in order to define a cylindrical chamber 6 for receiving the high viscosity fluid. A pair of parallel radial walls 5b, ending adjacent to the bush 3b, are fixed to the wall 5a. To each of the walls 5b an axial wall 5c, extending towards the wall 3d and ending close to it with a respective radial edge 5f, is connected. Between the walls 5c and the edges 5f on the one hand, and the corresponding portion of the bush 3b and of the wall 3d on the other hand, a pair of plain L-shaped bearings 10 are interposed, which are arranged symmetrically with respect to the wall 3d.

The ring-shaped element 5 constitutes also in this case the inertial mass of the torsional damper, which is of the viscous type.

The disc-shaped wall 3d forms a plate for dividing the space contained between the two annular walls 5b in such a way that between each wall 5b and the wall 3d, a respective ring cavity 13 is defined. Preferably, in each cavity 13 a pair of spiral springs 14 and 15 are arranged, in this case of the type having a circular cross-section. The springs 14 and 15 which, as in the previous embodiments, are arranged in such a way to work under compression when the hub 3 drives the ring-shaped element 5 into rotation, have each a first end 14a, 15a abutting on a respective shoulder surface 5d, 5e formed on the wall 5c (see figure 6), and a second tapered end 14b, 15b in abutment on tooth-shaped radial appendages 18a extending from the wall 3e towards the hub 3. As an alternative, between the walls 5d and the corresponding edges 5f, and between the wall 3d and the bent edges of the wall 3e, V-shaped holding seats for the corresponding ends of the springs 14 and 15 might be defined, said seats having a wider zone facing towards the respective cavity 13. In such a way, when the springs 14 and 15 tend to expand following to the arising of a tendency of the speed of the hub 3 to be greater than that one of the ring-shaped element 5, the respective ends 14a, 14b and 15a, 15b tend to wedge in such V-shaped seats in order to generate a forced connection of such ends, on the one hand with the hub 3 and on the other hand with the element 5.

The operation of this modification is quite similar to that one described with reference to the previous modification.

## Claims

1. Pulley unit, in particular for an internal combustion engine, comprising:
- a hub (3) adapted to be fastened at the end of a driving shaft, such as the crankshaft of an internal combustion engine,
- a ring-shaped element (5) externally coaxial to the hub (3) and having a peripheral seat (5a) for the engagement by a belt which is wound round the pulley unit (1), and
- connection means interposed between the hub (3) and the ring-shaped element (5), said means being adapted to undergo elastic deformations as a result of the tendency of the hub (3) to assume a speed different from that of the ring-shaped element (5), in order to carry out the function of a flexible coupling at least for small variations of said speed difference, said connection means having a behaviour different depending on the tendency of the hub (3) to rotate faster or slower than the ring-shaped element (5), such that with the increase of the tendency of the hub (3) to rotate faster than the ring-shaped element (5) said means assume the behaviour of a flexible coupling with increasing stiffness, while with the increase of the tendency of the hub (3) to rotate slower than the ring-shaped element (5), said means tend to make the hub (3) uncoupled from the ring-shaped element (5),
**characterized in that** the connection means comprise at least one metallic spiral spring (14, 15) wound on a plane perpendicular to the axis of the pulley unit (1), so as to undergo a compressive stress when a tendency originates in the hub (3) to rotate faster than the ring-shaped element (5).

2. Unit according to claim 1, **characterized in that** it incorporates a torsional vibration damping device (7).

3. Unit according to claim 2, **characterized in that** each spiral spring (14, 15) has a first radial inner end (14a, 15a) inserted in a respective seat (3b, 3c) of the hub (3), and a second radial outer end (14b, 15b) arranged substantially in contact with a portion (5c) of the ring-shaped element (5).

4. Unit according to claim 3, **characterized in that** a friction lining (18) is interposed between the second end (14b, 15b) of each spiral spring (14, 15) and said portion (5c) of the ring-shaped element (5).

5. Unit according to claim 4, **characterized in that** the friction lining (18) is a ring lining applied to said portion (5c) of the ring-shaped element (5).

6. Unit according to anyone of claims 1 to 5, **characterized in that** an elastic torsional damper (7) is associated to the hub (3), said damper (7) comprising a portion (7a) fixed to the hub (3) and an inertial mass (7b), the portion (7a) fixed to the hub (3) and the inertial mass (7b) being interconnected by an elastomeric insert (9).

7. Unit according to claim 6, **characterized in that** at least a plain bearing (10) is interposed between the portion (7a) of the torsional damper (7) fixed to the hub (3) and the ring-shaped element (5).

8. Unit according to claim 1 or 2, **characterized in that** each spiral spring (14, 15) has a first radial inner end (14a, 15a) inserted in a respective seat (5d, 5e) of the ring-shaped element (5) and a second radial outer end (14b, 15b) arranged substantially into contact with a portion (3e) of the hub (3).

9. Unit according to claim 8, **characterized in that** a plurality of formations (18a) extend from said portion (3e) of the hub (3), such formations (18a) being adapted to form shoulders for the second ends (14b, 15b) of each spiral spring (14, 15).

10. Unit according to claim 8 or 9, **characterized in that** said connection means comprise at least a spiral spring (14, 15) arranged in each annular cavity (13) of a pair of annular cavities (13) placed side by side and separated by a radial plate (3d).

11. Unit according to anyone of claims 8 to 10, **characterized in that** a viscous torsional damper (7) is associated to the hub (3), said damper (7) comprising a portion (3d, 3e) fixed to the hub (3) and an inertial mass (5a, 5b, 5c, 19; 5a, 5b, 5c, 5f), wherein said portion fixed to the hub (3) and the inertial mass are separated to each other by a cylindrical chamber (6) of small thickness in which a high viscosity fluid is contained.

12. Unit according to claim 11, **characterized in that** holes (21) are formed in a wall (3e) of the cylindrical chamber (6), said holes (21) bringing the cylindrical chamber (6) into communication with at least an annular cavity (13).

13. Unit according to anyone of claims 8 to 12, **characterized in that** at least a plain bearing (10) is interposed between the hub (3) and the ring-shaped element (5) .

14. Internal combustion engine having a pulley unit according to anyone of claims 1 to 13.

## Patentansprüche

1. Riemenscheibeneinheit, insbesondere für eine Brennkraftmaschine, umfassend:
- eine Nabe (3) für die Befestigung am Ende einer Antriebswelle, beispielsweise der Kurbelwelle einer Brennkraftmaschine,
- ein Ringelement (5), das außen koaxial zur Nabe (3) angeordnet ist und einen außen umlaufenden Sitz (5a) für den Eingriff eines um die Riemenscheibeneinheit (1) laufenden Riemens hat, sowie
- zwischen die Nabe (3) und das Ringelement (5) eingesetzte Kopplungsmittel, die elastischen Verformungen unterworfen sind aufgrund der Tendenz der Nabe (3), eine Geschwindigkeit einzunehmen, die von der des Ringelementes (5) abweicht, wodurch zumindest für kleine Veränderungen der Geschwindigkeitsdifferenz die Funktion einer flexiblen Kupplung ausgeübt wird, wobei die Kopplungsmittel in Abhängigkeit von der Tendenz der Nabe (3), schneller oder langsamer als das Ringelement (5) zu rotieren, ein unterschiedliches Verhalten haben, derart, daß mit steigender Tendenz der Nabe (3), schneller als das Ringelement (5) zu rotieren, die Kopplungsmittel das Verhalten eine flexiblen Kupplung mit zunehmender Steifigkeit haben, während mit steigender Tendenz der Nabe (3), langsamer als das Ringelement (5) zu rotieren, die Kopplungsmittel dazu neigen, die Nabe (3) von dem Ringelement (5) abzukoppeln,
**dadurch gekennzeichnet, daß** die Kopplungsmittel wenigstens eine metallische Spiralfeder (14, 15) aufweisen, die in einer rechtwinklig zur Achse der Riemenscheibeneinheit (1) liegenden Ebene gewickelt ist, so daß sie auf Kompression beansprucht wird, wenn in der Nabe (3) die Tendenz entsteht, schneller als das Ringelement (5) zu rotieren.

2. Riemenscheibeneinheit nach Anspruch 1, **dadurch gekennzeichnet, daß** diese eine Vorrichtung (7) zum Dämpfen von Torsionsschwingungen aufweist.

3. Riemenscheibeneinheit nach Anspruch 2, **dadurch gekennzeichnet, daß** jede Sprialfeder (14, 15) ein erstes radial, inneres Ende (14a, 15a), das in einen entsprechenden Sitz (3b, 3c) der Nabe (3) eingreift, und ein zweites radiales äußeres Ende (14b, 15b) aufweist, das im wesentlichen in Berührung mit einem Abschnitt (5c) des Ringelementes (5) ist.

4. Riemenscheibeneinheit nach Anspruch 3, **dadurch gekennzeichnet, daß** zwischen das zweite Ende (14b, 15b) jeder Sprialfeder (14, 15) und den Abschnitt (5c) des Ringelementes (5) eine Reibdichtung (18) eingesetzt ist.

5. Riemenscheibeneinheit nach Anspruch 4, **dadurch gekennzeichnet, daß** die Reibdichtung (18) aus einer Ringdichtung besteht, die an dem Abschnitt (5c) des Ringelementes (5) angebracht ist.

6. Riemenscheibeneinheit nach einem der Ansprüche 1 bis 5, **dadurch gekennzeichnet, daß** der Nabe (3) ein elastischer Torsionsdämpfer (7) zugeordnet ist, der einen an der Nabe (3) befestigten Abschnitt (7a) und eine träge Masse (7b) hat, wobei der an der Nabe (3) befestigte Abschnitt (7a) und die träge Masse (7b) durch einen Elastomer-Einsatz (9) miteinander verbunden sind.

7. Riemenscheibeneinheit nach Anspruch 6, **dadurch gekennzeichnet, daß** wenigstens ein Gleitlager (10) zwischen den an der Nabe (3) befestigten Abschnitt (7a) des Torsionsdämpfers (7) und das Ringelement (5) eingesetzt ist.

8. Riemenscheibeneinheit nach Anspruch 1 oder 2, **dadurch gekennzeichnet, daß** jede Spiralfeder (14, 15) ein erstes radiales inneres Ende (14a, 15a), das in einen entsprechenden Sitz (5d, 5e) des Ringelementes (5) eingesetzt ist, und ein zweites radiales äußeres Ende (14b, 15b) hat, das im wesentlichen in Berührung mit einem Abschnitt (3e) der Nabe (3) ist.

9. Riemenscheibeneinheit nach Anspruch 8, **dadurch gekennzeichnet, daß** von dem Abschnitt (3e) der Nabe (3) mehrere Vorsprünge (18a) abstehen, die Schultern für die zweiten Enden (14b, 15b) jeder Sprialfeder (14, 15) bilden.

10. Riemenscheibeneinheit nach Anspruch 8 oder 9, **dadurch gekennzeichnet, daß** die Kopplungsmittel wenigstens eine Spiralfeder (14, 15) aufweisen, die in jedem ringförmigen Hohlraum (13) eines Paares von ringförmigen Hohlräumen (13) angeordnet ist, welche nebeneinander angeordnet und durch eine radiale Wand (3d) voneinander getrennt sind.

11. Riemenscheibeneinheit nach einem der Ansprüche 8 bis 10, **dadurch gekennzeichnet, daß** der Nabe (3) ein zähflüssiger Torsionsdämpfer (7) zugeordnet ist, der einen an der Nabe (3) befestigten Abschnitt (3d, 3e) sowie eine träge Masse (5a, 5b, 5c, 19; 5a, 5b, 5c, 5f) hat, wobei der an der Nabe (3) befestigte Abschnitt und die träge Masse durch eine zylindrische Kammer (6) geringer Stärke voneinander getrennt sind, welche eine hochviskose Flüssigkeit enthält.

12. Riemenscheibeneinheit nach Anspruch 11, **dadurch gekennzeichnet, daß** in eine Wand (3e) der zylindrischen Kammer (6) Bohrungen (21) eingearbeitet sind, über welche die zylindrische Kammer (6) mit wenigstens einem ringförmigen Hohlraum (13) in Verbindung steht.

13. Riemenscheibeneinheit nach einem der Ansprüche 8 bis 12, **dadurch gekennzeichnet, daß** zwischen die Nabe (3) und das Ringelement (5) wenigstens ein Gleitlager (10) eingesetzt ist.

14. Brennkraftmaschine mit einer Riemenscheibeneinheit nach einem der Ansprüche 1 bis 13.

## Revendications

1. Ensemble de poulie, en particulier pour un moteur à combustion interne, comprenant:
- un moyeu (3) prévu pour être fixé à l'extrémité d'un arbre d'entraînement comme le vilebrequin d'un moteur à combustion interne;
- un élément de forme annulaire (5) coaxial, de façon externe, au moyeu (3) et possédant un support de périphérie (5a) pour l'engagement d'une courroie enroulée autour de l'ensemble de poulie (1); et
- des moyens de connexion interposés entre le moyeu (3) et l'élément de forme annulaire (5), lesdits moyens étant prévus pour subir des déformations élastiques par suite de la tendance du moyeu (3) à adopter une vitesse différente de celle de l'élément de forme annulaire (5) afin de remplir la fonction d'un accouplement flexible au moins pour de petites variations de ladite différence de vitesse, lesdits moyens de connexion ayant un comportement différent selon la tendance du moyeu (3) à tourner plus vite ou moins vite que l'élément de forme annulaire (5) de telle façon que, lors d'une augmentation de la tendance du moyeu (3) à tourner plus vite que l'élément de forme annulaire (5), lesdits moyens se comportent comme un accouplement flexible avec une raideur croissante tandis que, avec l'augmentation de la tendance du moyeu (3) à tourner plus lentement que l'élément de forme annulaire (5), lesdits moyens ont tendance à découpler le moyeu (3) de l'élément de forme annulaire (5);
**caractérisé en ce que** les moyens de connexion comprennent au moins un ressort métallique en spirale (14, 15) enroulé dans un plan perpendiculaire à l'axe de l'ensemble de poulie (1) de façon à subir une contrainte de compression lorsque le moyeu (3) a tendance à tourner plus vite que l'élément de forme annulaire (5).

2. Ensemble selon la revendication 1, **caractérisée en ce qu'**elle comporte un dispositif d'amortissement des vibrations de torsion (7).

3. Ensemble selon la revendication 2, **caractérisée en ce que** chaque ressort en spirale (14, 15) possède une première extrémité interne radiale (14a, 15a) insérée dans un siège respectif (3b, 3c) du moyeu (3) et une seconde extrémité externe radiale (14b, 15b) disposée sensiblement en contact avec une partie (5c) de l'élément de forme annulaire (5).

4. Ensemble selon la revendication 3, **caractérisée en ce qu'**une garniture (18) est interposée entre la seconde extrémité (14b, 15b) de chaque ressort en spirale (14, 15) et ladite partie (5c) de l'élément de forme annulaire (5).

5. Ensemble selon la revendication 4, **caractérisée en ce que** la garniture (18) est une garniture annulaire appliquée à ladite partie (5c) de l'élément de forme annulaire (5).

6. Ensemble selon l'une quelconque des revendications 1 à 5, **caractérisée en ce qu'**un amortisseur élastique de vibration de torsion (7) est associé au moyeu (3), ledit amortisseur (7) comprenant une partie (7a) fixée au moyeu (3) et une masse d'inertie (7b), la partie (7a) fixée au moyeu (3) et la masse d'inertie (7b) étant interconnectées par un insert en élastomère (9).

7. Ensemble selon la revendication 6, **caractérisée en ce qu'**au moins un palier lisse (10) est interposé entre la partie (7a) de l'amortisseur de torsion (7) fixée au moyeu (3) et à l'élément de forme annulaire (5).

8. Ensemble selon la revendication 1 ou 2, **caractérisée en ce que** chaque ressort en spirale (14, 15) possède une première extrémité interne radiale (14a, 15a) insérée dans un support respectif (5d, 5e) de l'élément de forme annulaire (5) et une seconde extrémité externe radiale (14b, 15b) disposée sensiblement en contact avec une partie (3e) du moyeu (3).

9. Ensemble selon la revendication 8, **caractérisée en ce qu'**une pluralité de formations (18a) s'étendent à partir de ladite partie (3e) du moyeu (3), de telles formations (18a) étant prévues pour constituer des épaulements pour les secondes extrémités (14b, 15b) de chaque ressort en spirale (14, 15).

10. Ensemble selon la revendication 8 ou 9, **caractérisé en ce que** lesdits moyens de connexion comprennent au moins un ressort en spirale (14, 15) placé dans chaque cavité annulaire (13) d'une paire de cavités annulaires (13) placées côte à côte et séparées par une plaque radiale (3d) .

11. Ensemble selon l'une quelconque des revendications 8 à 10, **caractérisée en ce qu'**un amortisseur visqueux de torsion (7) est associé au moyeu (3), ledit amortisseur (7) comprenant une partie (3d, 3e) fixée au moyeu (3) et une masse d'inertie (5a, 5b, 5c, 19; 5a, 5b, 5c, 5f), ladite partie fixée au moyeu (3) et la masse d'inertie étant séparées l'une de l'autre par une chambre cylindrique (6) de petite épaisseur contenant un fluide de haute viscosité.

12. Ensemble selon la revendication 11, **caractérisée en ce que** des trous (21) sont formés dans une paroi (3e) de la chambre cylindrique (6), lesdits trous (21) mettant la chambre cylindrique (6) en communication avec au moins une cavité annulaire (13).

13. Ensemble selon l'une quelconque des revendications 8 à 12, **caractérisée en ce qu'**au moins un palier lisse (10) est interposé entre le moyeu (3) et l'élément de forme annulaire (5).

14. Moteur à combustion interne possédant un ensemble de poulie selon l'une quelconque des revendications 1 à 13.
